# EUROPEAN PATENT SPECIFICATION

(11) **EP 3 651 175 B1**
(45) Date of publication and mention of the grant of the patent: **21.04.2021**
(21) Application number: 19190184.2
(22) Date of filing: 06.08.2019
(51) Int. Cl.: H01H 9/54

(54) **CIRCUIT-BREAKER WITH REDUCED BREAKDOWN VOLTAGE REQUIREMENT**
LEISTUNGSSCHALTER MIT VERRINGERTER ANFORDERUNG AN DIE DURCHBRUCHSPANNUNG
DISJONCTEUR AVEC EXIGENCE DE RÉDUCTION DE LA TENSION DE CLAQUAGE

(30) Priority: 12.11.2018 GB 201818407
(43) Date of publication of application: 13.05.2020
(73) Proprietor: Eaton Intelligent Power Limited, Dublin 4 (IE)
(72) Inventor: ASKAN, Kenan, 1090 Wien (AT)
(74) Representative: Eaton IP Group EMEA

(56) References cited:
- CN-A- 108 597 926
- US-A1- 2007 121 257

## Description

The invention is directed to a circuit-breaker with reduced breakdown voltage requirement, especially for components of a switching circuit of the circuit-breaker.

A metal oxide varistor (MOV), which is a non-linear resistor, may be used in a circuit breaker, for example a hybrid circuit breaker or a solid state circuit breaker, as an over voltage protection device. The varistor is the most critical component during the interruption of a load current, fault current and over-current. The energy stored in the line and stray inductances is transferred to the varistor. The varistor dissipates almost 99% of its energy as heat and increases its voltage to stop the current flow in the circuit-breaker.

The current-voltage (I-V) characteristics of the varistor are important to dimension and select appropriate semiconductor switches with appropriate breakdown voltages in the switching circuit of the circuit-breaker. Even at low voltages a (metal oxide) varistor can conduct a small amount of current and faces thermal run away if the energy is above the maximum allowed energy of the varistor. In order to avoid leakage current flowing through the varistor at nominal source voltages, a (metal oxide) varistor having an appropriate clamping voltage shall be selected at the maximum ambient (case) temperature.

Due to logarithmic I-V characteristics of the (metal oxide) varistor, semiconductor switches with large breakdown voltage are required. This results in dramatically increased conduction losses, size and cost of semiconductor switches.

CN 108 597 926 A relates to hybrid DC circuit breaker comprising a controllable switch being configured as an IGBT connected to a solid-state switch branch and a voltagelimiting energy-absorbing branch including a varistor for forcing a fault current to quickly commutate to the solid-state switch branch. US 2007/0121257 A1 is directed to a hybrid solid-state switchgear comprising a mechanical switch and a solid-state switch connected in parallel to the mechanical switch.

An object of the present invention is to provide a circuit-breaker having a reduced breakdown voltage requirement for semiconductor switches.

An embodiment of a circuit-breaker is specified in claim 1.

The circuit-breaker allows to decrease the breakdown voltage requirement by actively connecting and disconnecting a lower voltage clamping MOV from the protection point.

The circuit-breaker described herein is explained in greater detail below by way of exemplary embodiments with reference to the drawings. Elements which are the same in the individual figures are indicated with the same reference signs. The disclosure will be more fully understood from the following detailed description, taken in conjunction with the accompanying figures in which:
Figure 1 shows a conventional embodiment of a hybrid circuit-breaker comprising a varistor as an overvoltage protection device according to US 2016/0203932 A1;
Figure 2 illustrates I-V characteristics of a varistor device;
Figure 3 shows current and voltage wave forms of a hybrid circuit-breaker during the interruption of a prospective short-circuit current;
Figure 4 shows current-voltage characteristics of a standard varistor;
Figure 5 illustrates a first embodiment of a circuit-breaker with reduced breakdown voltage requirement of controllable switches of a controllable switching unit of the circuit-breaker;
Figure 6 shows a second embodiment of a circuit-breaker with reduced breakdown voltage requirement of controllable switches of a controllable switching unit of the circuit-breaker;
Figure 7 shows a third embodiment of a circuit-breaker with reduced breakdown voltage requirement of controllable switches of a controllable switching unit of the circuit-breaker;
Figure 8 illustrates a circuit-breaker not part of the present invention with reduced breakdown voltage requirement of back-to-back connected controllable switches of a controllable switching unit of the circuit-breaker;
Figure 9 shows an embodiment of a circuit-breaker being configured as a solid state circuit-breaker with reduced breakdown voltage requirement of controllable switches of a controllable switching unit of the circuit-breaker; and
Figure 10 illustrates a solid state circuit-breaker not part of the present invention in a back-to-back topology with reduced breakdown voltage requirement of controllable switches of a controllable switching unit.

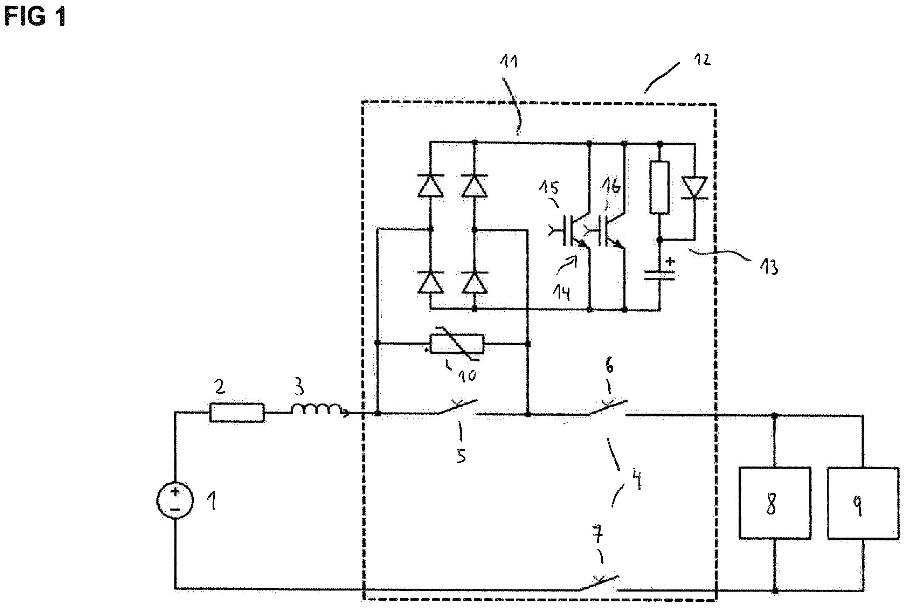

Figure 1 shows an embodiment of a conventional circuit-breaker 12, being embodied as a hybrid circuit-breaker. A voltage source 1 is applied to the circuit breaker 12 via a resistor 2 and inductor 3. In the other figures, the voltage source is also referenced with 1 and the resistor is referenced with 2 and the inductor is referenced with 3. Furthermore, in all Figures the reference sign 9 represents a load, for example an R-L-C load, which is coupled to the circuit breaker. The reference sign 8 indicates a fault in all Figures.

The circuit breaker 12 comprises a switching circuit 11. The switching circuit 11 comprises a controllable switching unit 14 including a controllable switch 15 and a controllable switch 16. The controllable switches 15 and 16 may be respectively configured as an IGBT (insulated-gate bipolar transistor) being embedded in a diode rectifier bridge in order to build up a four-quadrant bi-directional power semiconductor switch. The four-quadrant switch is placed in parallel with a bypass switch 5. The bypass switch 5 is connected in series to a separation switching unit 4 comprising separation relays 6 and 7. A varistor device 10 is connected in parallel to the switching circuit 11 and the bypass switch 5. The

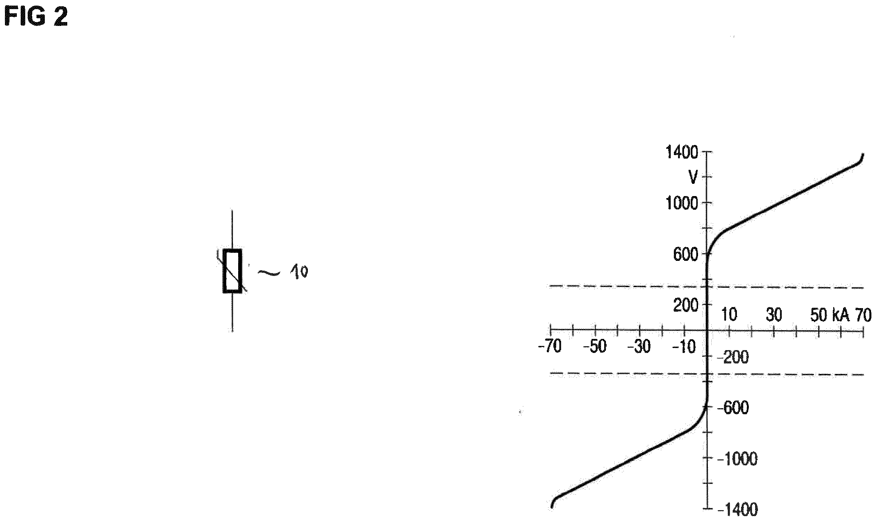

Varistors (variable resistors) are basically voltagedependent resistors with a symmetrical V-I characteristic curve, as shown in Figure 2. The resistance of a varistor decreases with increasing voltage. The varistor device 10 of the circuit-breaker 12 of Figure 1 may be configured as a metal oxide varistor (MOV). A metal oxide varistor is a non-linear resistor which is used in the hybrid circuit-breaker of Figure 1 as an overvoltage protection device.

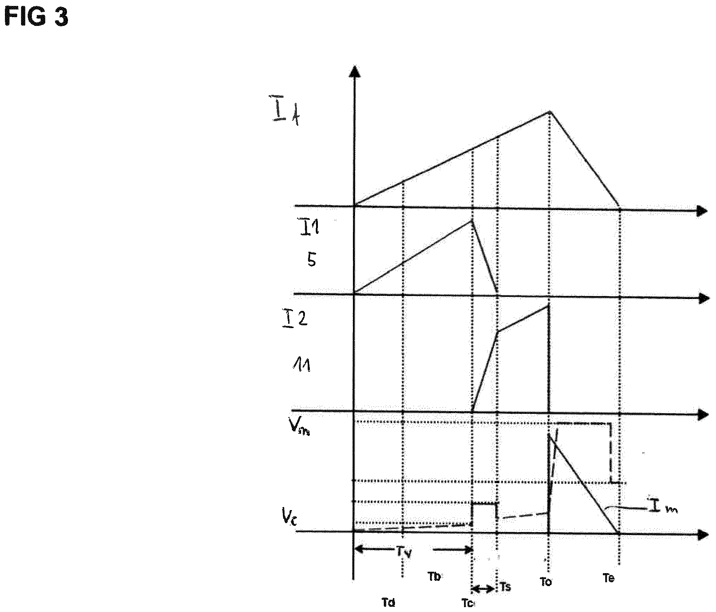

Figure 3 shows a diagram of current and voltage wave forms of a circuit-breaker being embodied as a hybrid circuit-breaker, as shown in Figure 1, during the interruption of a 10 kA prospective short-circuit current. The three upper diagrams illustrate the source current If generated by the voltage source 1, the current I1 through the bypass switch 5, and the current I2 flowing through the switching circuit 11. The lower diagram shows the voltage Vc/Vm at the contacts of the bypass switch 5/the varistor device 10 and the current Im through the varistor device 10.

As soon as a fault has been detected at time T_{d}, the bypass switch 5 is triggered to open its contact. The mechanical contacts of the bypass switch 5 start to open at T_{b} due to electro-mechanical delays (Tᵥ). At T_{b}, with first contact movement of the bypass switch 5, an arc voltage is produced between the contacts to force the fault current to commutate to the switching circuit 11. Next, at Tₛ, the complete fault current flows through the switching circuit 11. At T_{O}, the controllable switches 15 and 16 are turned off, thus causing the current to commutate to an RCD (Resistor-Capacitor-Diode) snubber network 13 and the metal oxide varistor device 10. The network 13 is used to bypass the delay time in response of the varistor device 10. At Tₑ, the fault current has almost reached a zero level, and the separation switches 6 and 7 can be opened without current and voltage being applied to the contacts.

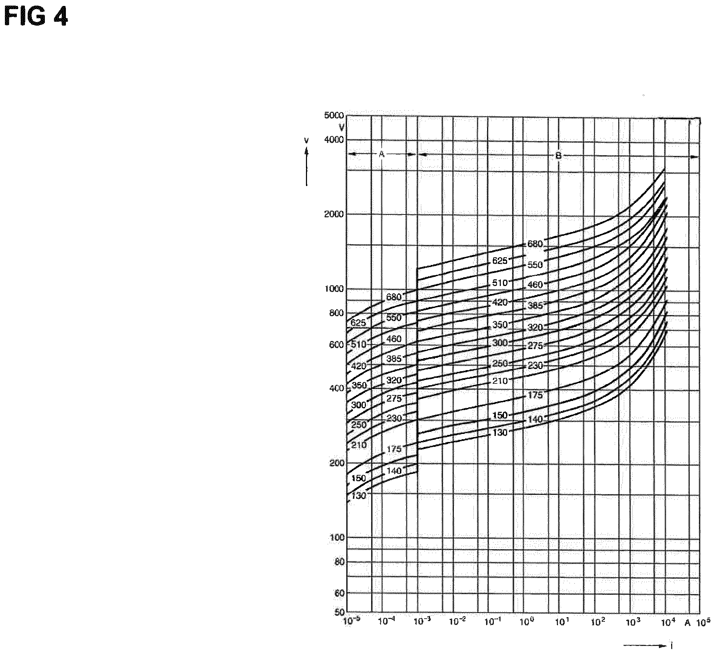

The current-voltage (I-V) characteristics of the varistor device 10 are important to dimension and select appropriate controllable switches/semiconductor switches 15 and 16 with appropriate breakdown voltages. Figure 4 illustrates current-voltage characteristics from a standard varistor, for example S20K300E3K1 at maximum temperature of 85° and with minimum and maximum tolerances from EPCOS.

Referring to Figure 3, in this example a varistor, for example S20K300E3K1 from EPCOS, having AC300Vrms and DC385 V withstands voltage at 85 °C case temperature where the leakage current is smaller than 1 mA in steady state. In the example, the varistor used is a metal oxide varistor. This voltage level is suitable for 230 Vrms and 385 V nominal source voltage levels at 85°. In the case when the separation switches 6 and 7, for example galvanic separation relays, are not open, the varistor device 10 arranged parallel to the bypass switch 5 will continuously, or at least until the opening of the separation relays 6 and 7 (standard relays open between 20 milliseconds to 30 milliseconds), face the source voltage. At the turnoff of the fault current around 1650 A, the voltage peak on the controllable switches 15 and 16 is around 1000 V for a short time, for instance a few hundred microseconds. This is to say that the controllable switches 15 and 16, for example, the IGBTs, shall have at least 1200 V breakdown voltage at 25° C junction temperature .

With the presumption that the separation switches/galvanic separation relays 6 and 7 will be always switched off during the switch-off operation of the complete breaker, a lower voltage clamping varistor could be used to decrease the voltage peak during the turn-off of the controllable switches 15 and 16 and reduce the breakdown voltage requirements of the controllable switches 15 and 16 and diodes in the rectifier bridge. As shown in Figure 4, the varistor device S20K150300EK1 from EPCOS can operate at AC 150 Vrms and DC 200 V at 85 °C case temperature while the leakage current is less than 1 mA. This varistor would keep the peak voltage below 600 V DC during turning-off 1650 A fault current. This is to say that 600/650 V IGBT could be used as a controllable switch instead of 1200 V IGBT. In this application, the 600/650 V IGBT used as controllable switches 15 and 16 and the diodes in the rectifier bridge would result in a reduced semiconductor active area, cost and on-state losses as drift region decreases with a decreased breakdown voltage.

Nevertheless, at 350 V DC there would be around a few 10 Amps flowing through the varistor of the S20K150300EK1 type. That means that even at low voltages the varistor device can conduct a small amount of current and faces thermal run-away if the energy is above the maximum allowed energy of the varistor device. The separation switches 6 and 7, for example the galvanic separation relays, could react and open the contacts under current. As the galvanic separation relays are not ultra-fast contact openings like the bypass relay 5 and have 20 ms to 30 ms conventional opening time, the dissipated fault energy and the additional few Amps flowing through the varistor device 10 may result in thermal run-away of the device.

In addition, the separation switches 6 and 7 would need to be able to open the contact at 10 A DC current which may not be possible or may be difficult due to DC operation and no arc-extinguishing characteristics of the bypass-relays. In a state of the art hybrid circuit-breaker according to US 2016/0203932 A1, the bypass relays are sized to open contact under no current and to provide galvanic separation only.

It is also a known fact from US 2016/0203932 A1 that at closing of the galvanic separation relays, even the bypass relay 5 and the controllable switches 15, 16 are in the off-position, there will be a huge inrush current flowing through the bouncing contacts. This results in damaged contacts under repeated arcing during the bouncing which may last for a few milliseconds.

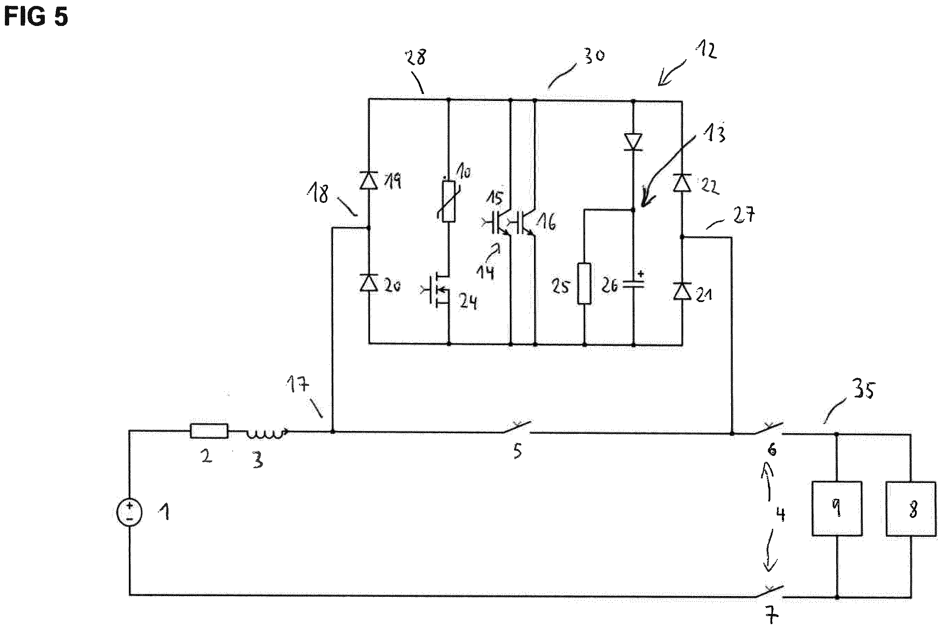

Figure 5 shows an embodiment of a circuit-breaker 12 with reduced breakdown voltage requirement comprising an input terminal 17 to connect the circuit-breaker 12 to a voltage source 1, and an output terminal 35 to connect the circuit-breaker 12 to a load. In the illustrated embodiment, the load RLC consisting of resistance, inductance and capacitance is short-circuited by a fault. The circuit-breaker 12 comprises a switching circuit 30 having an input side 18 being connected to the input terminal 17 of the circuit-breaker and having an output side 27. The circuit-breaker 12 further comprises a separation switching unit 4 being connected to the output terminal 35 and to the output side 27 of the switching circuit 30. The switching circuit 30 comprises a first current path 28 and a second current path 29. The first and the second current path 28, 29 are connected in parallel between the input side 18 and the output side 27 of the switching circuit. The switching circuit 30 comprises a varistor device 10 and a controllable switching component 24 which are connected in series between the first and the second current path 28, 29.

The switching circuit 30 comprises a controllable switching unit 14/DC link being arranged between the first and the second current path 28, 29 to short-circuit the first and the second current path 28, 29. The controllable switching unit 14 comprises at least one controllable switch being connected to the first current path 28 and the second current path 29. In particular, according to the embodiment of the circuit-breaker shown in Figure 5, the controllable switching unit 14 comprises at least a first controllable switch 15 or several controllable switches. Figure 5 shows an embodiment of the controllable switching unit 14 comprising a first controllable switch 15 and a second controllable switch 16 being connected in parallel between the first current path 28 and the second current path 29. The at least one controllable switch 15, 16 are respectively embodied as an insulated-gate bipolar transistor (IGBT) or a MOSFET or similar switches.

According to the embodiment of the circuit-breaker 12 shown in Figure 5, the circuit-breaker comprises a first diode 19, a second diode 20, a third diode 21 and a fourth diode 22. The first diode 19 is connected to the input side 18 of the switching circuit 30 and the first current path 28. The second diode 20 is connected to the input side 18 of the switching circuit 30 and the second current path 29. The third diode 21 is connected to the output side 27 of the switching circuit 30 and the first current path 28. The fourth diode 22 is connected to the output side 27 of the switching circuit 30 and the second current path 29.

According to the embodiment shown in Figure 5, the circuit-breaker 12 comprises a (turn-off snubber) network 13 including a fifth diode 23, a first resistor 25 and a capacitor 26. The fifth diode 23 is connected to the first current path 28. The first resistor 25 and the capacitor 26 are configured as a parallel connection being connected between the fifth diode 23 and the second current path 29.

The circuit-breaker 12 comprises a bypass switch 5 being connected to the input terminal 17 and the output side 27 of the switching circuit 30. The bypass switch 5 is connected in parallel to the switching circuit 30.

The circuit-breaker 12 shown in Figure 5 solves the problems which are given above, by introducing the controllable switching component 24, in particular a unidirectional semiconductor switch, in series with the varistor device 10 which is integrated into the DC link of the solid state four-quadrant bi-directional power electronics switch. The circuit-breaker 12 makes it possible that utilization of controllable switches 15, 16 and diodes 19, ..., 23 having a lower breakdown voltage requirement is possible.

As shown in Figure 5, the controllable switching component 24 may be configured as a semiconductor switch being connected in series with the varistor device 10. The controllable switching component 24 is used to turn off the varistor device leakage currents in order to open the separation switches/galvanic separation relays 6 and 7 without current to avoid overheating of the varistor device and to be able to open the separation switches 6 and 7 without arcing. The controllable switching component 24 may be configured as a MOSFET or an IGBT or a conventional turned-on JFET. The controllable switching component 24 will be turned on only during switch on and off operations of the breaker. By this realization, it is possible to use IGBTs 15 and 16 having a breakdown voltage of 600 V instead of using IGBTs 15 and 16 having a breakdown voltage of 1200 V.

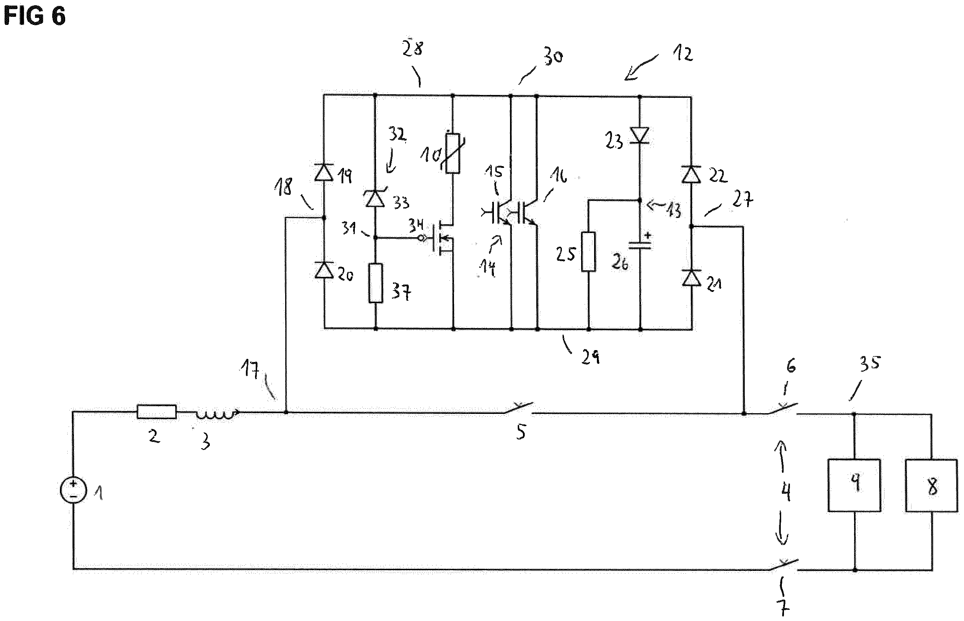

Figure 6 shows another embodiment of a circuit-breaker 12 with reduced breakdown voltage requirement for the controllable switches 15 and 16 of the controllable switching unit 14. In addition to the embodiment of the circuit-breaker 12 shown in Figure 5, the circuit-breaker 12 of Figure 6 comprises a control circuit 32 to control the controllable switching component 24. The control circuit 32 comprises a Zener diode 33 and a second resistor 37. The Zener diode 33 and the second resistor 37 are connected in series between the first current path 28 and the second current path 29. A control connection 34 of the controllable switching component 24 is connected to an internal node 31 of the control circuit 32 between the Zener diode 33 and the second resistor 37. The Zener diode 33 in series with the second resistor 37 is used to switch on and off the controllable switching component 24 without additional gate driver and power source.

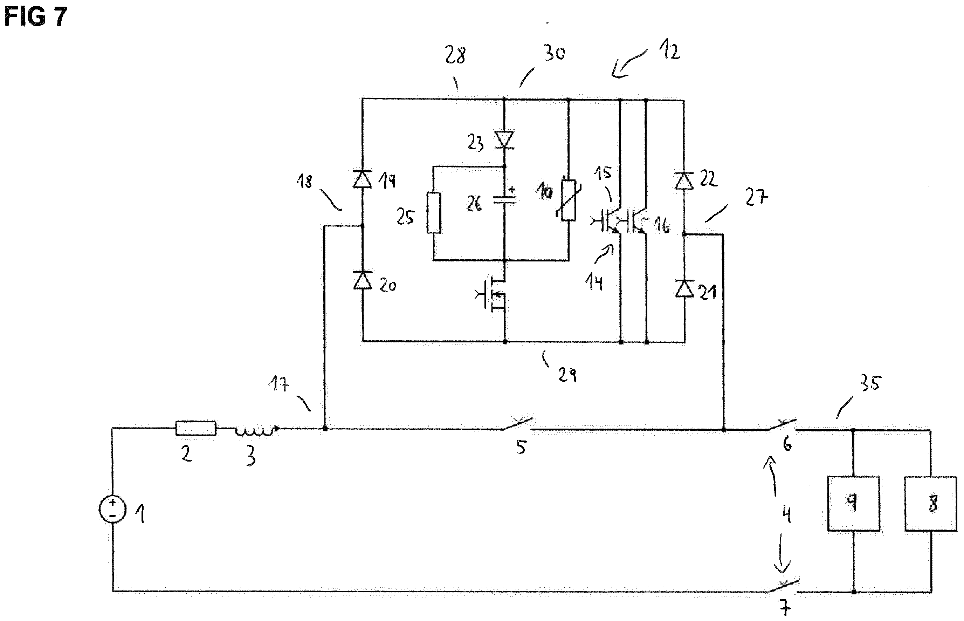

Figure 7 shows an embodiment of a circuit-breaker 12 to avoid arc generation during bouncing of the separation switches 6 and 7 during normal switch-on due to an inrush current of the capacitor 26 of the (snubber) network 13 of Figure 5. The network 13 is basically used as an overvoltage protection to protect the controllable switching unit 14 and to bypass the delay time in response to the varistor device 10. The network 13 includes a fifth diode 23, a first resistor 25 and a capacitor 26. The fifth diode 23 is connected to the first current path 28. The first resistor 25 and the capacitor 26 are configured as a parallel connection. The parallel connection of the first resistor 25 and the capacitor 26 is connected between the fifth diode 23 and the controllable switching component 24.

This configuration allows to eliminate the arcing during the bouncing of the separation switches 6 and 7 due to the (snubber) capacitor 26. Nevertheless, by good connection of the leads of the varistor device 10 with the shortest possible length, it may be possible to remove the (snubber) network 13 from the circuit. This is because the varistor device 10 has a very short response time such as a few 10 ns. The effects of cosmic rays on the switching circuit 30 of the circuit-breaker which is facing its source voltage constantly may be an issue. Nevertheless, by switching off the separation switches/galvanic separation relays 6 and 7 by a switch-off operation of the breaker, the separation switches 6 and 7 will not face continuous source voltage applied to them. Such as for 100.000 switching cycles under source voltage and current, the controllable switching unit 14 will face only less than a total of one hour in its complete lifetime.

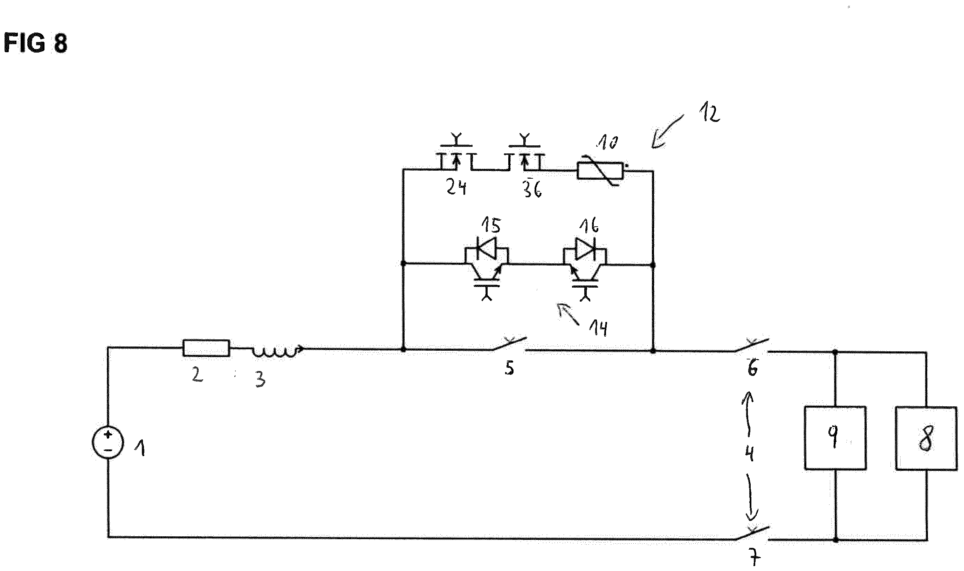

Figure 8 shows a circuit-breaker 12 not part of the present invention in a back-to-back topology having controllable switches 15 and 16, for example IGBTs, with freewheeling antiparallel diodes or MOSFETs in anti-series position.

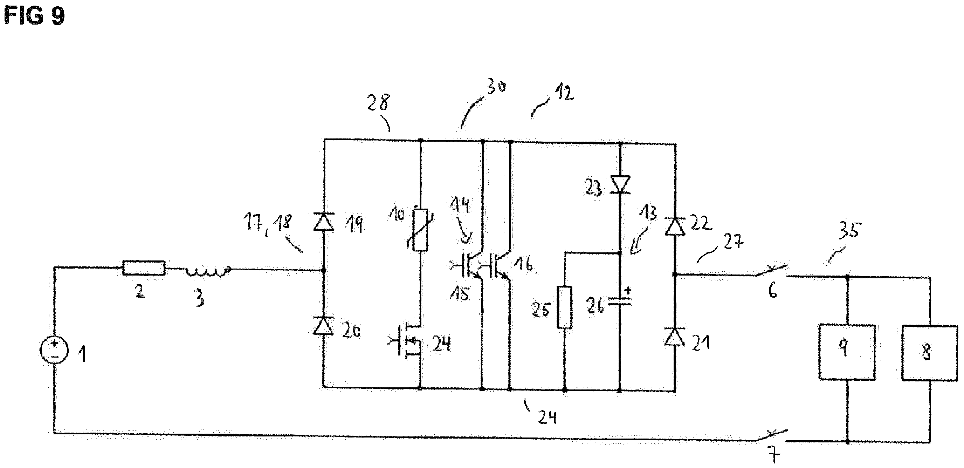

Figures 5 to 7 show various embodiments of a circuit-breaker 12 being respectively embodied as a hybrid circuit-breaker. The invention can be further used in a solid state circuit-breaker where the breaker faces high solid state ohmic losses, as shown in Figure 9. The invention used in a solid state circuit-breaker configuration reduces the solid state ohmic power losses of the circuit-breaker by half.

According to the embodiment of the solid state circuit-breaker shown in Figure 9, the bypass switch 5 of the circuit-breakers of Figures 5 to 7 is removed so that it is only the switching circuit 30 which is connected between the input terminal 17 of the circuit-breaker and the separation switching unit 4.

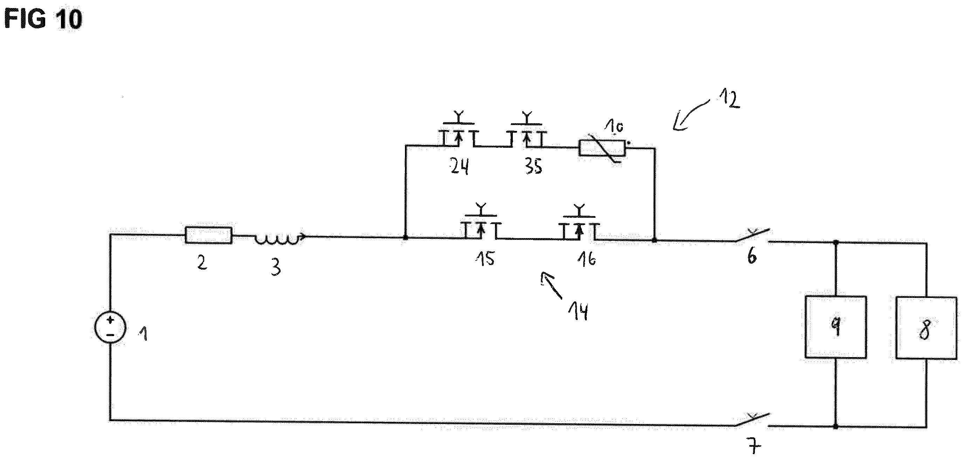

Figure 10 shows a solid state circuit-breaker in a back-to-back topology, which is not part of the present invention. The switching circuit 30 comprises a first branch with controllable switching components 15 and 16 in anti-series position connected in series to the varistor device V, and a second branch including controllable switches 24, 36, for example MOSFETs or IGBTs.

In conclusion, the circuit-breaker of the invention essentially provides two solutions. First, by utilization of a controllable switching component 24 in series with the varistor device 10 in controllable switches/IGBTs embedded in a diode rectifier, it is possible to decrease the breakdown voltage requirement of the controllable switches/IGBTs, diodes or MOSFETs by half by a varistor clamping voltage decreased by half.

PN-diodes and IGBTs are minority carrier semiconductor switches (bipolar) and their on-state voltage drop is proportional to the breakdown voltage. MOSFETs and Schottky diodes are majority carrier semiconductor switches (unipolar) and their on-state voltage drop is proportional to the square of the breakdown voltage. In other words, the conduction losses of the semiconductor switches can be halved as well by dramatically reduced on-state channel resistance. By decreasing the breakdown voltage requirement of the semiconductor switches, a hybrid circuit-breaker with larger current density can be realized.

Secondly, the circuit-breaker of the present invention also avoids the arcing during the closing of separation switches 6 and 7 under bouncing due to the (snubber) capacitor 26 of the network 13.

## Claims

1. A circuit-breaker, comprising:
- an input terminal (17) to connect the circuit-breaker (12) to a voltage source (1),
- an output terminal (35) to connect the circuit-breaker (12) to a load (9),
- a switching circuit (30) having an input side (18) being connected to the input terminal (17) and having an output side (27),
- a separation switching unit (4) being connected to the output terminal (35) and to the output side (27) of the switching circuit (30),
- wherein the switching circuit (30) comprises a first current path (28) and a second current path (29), the first and the second current path (28, 29) being connected in parallel between the input side (18) and the output side (27),
- wherein the switching circuit (30) comprises a controllable switching unit (14) being arranged between the first and the second current path (28, 29) to short-circuit the first and the second current path (28, 29),
- wherein the switching circuit (30) comprises a varistor device (10) and a controllable switching component (24), wherein the varistor device (10) and the controllable switching component (24) are connected in series between the first and the second current path (28, 29),
**characterized in that** the controllable switching unit (14) is connected in parallel to the series connection of the varistor device (10) and the controllable switching component (24) .

2. The circuit-breaker of claim 1,
wherein the controllable switching unit (14) comprises at least one controllable switch (15) being connected to the first current path (28) and the second current path (29).

3. The circuit-breaker of claim 2,
wherein the controllable switching unit (14) comprises a first controllable switch (15) and a second controllable switch (16) being connected in parallel between the first current path (28) and the second current path (29).

4. The circuit-breaker of claims 2 or 3,
wherein the at least one controllable switch (15) or the first and the second controllable switches (15, 16) are respectively embodied as an insulated-gate bipolar transistor.

5. The circuit-breaker of any of the claims 1 to 4, comprising:
- a first diode (19), a second diode (20), a third diode (21) and a fourth diode (22),
- wherein the first diode (19) is connected to the input side (18) of the switching circuit (30) and the first current path (28),
- wherein the second diode (20) is connected to the input side (18) of the switching circuit (30) and the second current path (29),
- wherein the third diode (21) is connected to the output side (27) of the switching circuit (30) and the first current path (28),
- wherein the fourth diode (22) is connected to the output side (27) of the switching circuit (30) and the second current path (29).

6. The circuit-breaker of any of the claims 1 to 5, comprising:
- a network (13) including a fifth diode (23), a first resistor (25) and a capacitor (26),
- wherein the fifth diode (23) is connected to the first current path (28),
- wherein the first resistor (25) and the capacitor (26) are configured as a parallel connection,
- wherein the parallel connection of the first resistor (25) and the capacitor (26) is connected between the fifth diode (23) and the second current path (29).

7. The circuit-breaker of any of the claims 1 to 6, comprising:
- a control circuit (32) to control the controllable switching component (24),
- wherein the control circuit (32) comprises a Zener diode (33) and a second resistor (37),
- wherein the Zener diode (33) and the second resistor (37) are connected in series between the first current path (28) and the second current path (29),
- wherein a control connection (34) of the controllable switching component (24) is connected to an internal node (31) of the control circuit (32) between the Zener diode (33) and the second resistor (37).

8. The circuit-breaker of any of the claims 1 to 5, comprising:
- a network (13) including a fifth diode (23), a first resistor (25) and a capacitor (26),
- wherein the fifth diode (23) is connected to the first current path (28),
- wherein the first resistor (25) and the capacitor (26) are configured as a parallel connection,
- wherein the parallel connection of the first resistor (25) and the capacitor (26) is connected between the fifth diode (23) and the controllable switching component (24).

9. The circuit-breaker of any of the claims 1 to 8, comprising:
- a bypass switch (5) being connected to the input terminal (17) and the output side (27) of the switching circuit (30),
- wherein the bypass switch (5) is connected in parallel to the switching circuit (30).

10. The circuit-breaker of any of the claims 1 to 9, wherein the circuit-breaker (12) is embodied as a hybrid circuit-breaker.

11. The circuit-breaker of any of the claims 1 to 8, wherein the circuit breaker (12) is embodied as a solid-state circuit breaker.

## Patentansprüche

1. Leistungsschalter, umfassend:
- einen Eingangsanschluss (17) zum Verbinden des Leistungsschalters (12) mit einer Spannungsquelle (1),
- einen Ausgangsanschluss (35) zum Verbinden des Leistungsschalters (12) mit einer Last (9),
- einen Schaltkreis (30) mit einer Eingangsseite (18), die mit dem Eingangsanschluss (17) verbunden ist, und mit einer Ausgangsseite (27),
- eine Separationsschalteinheit (4), die mit dem Ausgangsanschluss (35) und mit der Ausgangsseite (27) des Schaltkreises (30) verbunden ist,
- worin der Schaltkreis (30) einen ersten Stromweg (28) und einen zweiten Stromweg (29) umfasst, worin der erste und der zweite Stromweg (28, 29) parallel zwischen der Eingangsseite (18) und der Ausgangsseite (27) verbunden sind,
- worin der Schaltkreis (30) eine steuerbare Schalteinheit (14) umfasst, die zwischen dem ersten und dem zweiten Stromweg (28, 29) angeordnet ist, um den ersten und den zweiten Stromweg (28, 29) kurzzuschließen,
- worin der Schaltkreis (30) eine Varistor-Vorrichtung (10) und eine steuerbare Schaltkomponente (24) umfasst, worin die Varistor-Vorrichtung (10) und die steuerbare Schaltkomponente (24) in Reihe zwischen dem ersten und dem zweiten Stromweg (28, 29) verbunden sind, **dadurch gekennzeichnet, dass** die steuerbare Schalteinheit (14) parallel zu der Reihenschaltung der Varistor-Vorrichtung (10) und der steuerbaren Schaltkomponente (24) verbunden ist.

2. Leistungsschalter nach Anspruch 1, worin die steuerbare Schalteinheit (14) zumindest einen steuerbaren Schalter (15) umfasst, der mit dem ersten Stromweg (28) und dem zweiten Stromweg (29) verbunden ist.

3. Leistungsschalter nach Anspruch 2, worin die steuerbare Schalteinheit (14) einen ersten steuerbaren Schalter (15) und einen zweiten steuerbaren Schalter (16) umfasst, die parallel zwischen dem ersten Stromweg (28) und dem zweiten Stromweg (29) verbunden sind.

4. Leistungsschalter nach den Ansprüchen 2 oder 3, worin der zumindest eine steuerbare Schalter (15) oder der erste und der zweite steuerbare Schalter (15, 16) jeweils als ein Bipolartransistor mit isolierter Gate-Elektrode umgesetzt sind.

5. Leistungsschalter nach einem der Ansprüche 1 bis 4, umfassend:
- eine erste Diode (19), eine zweite Diode (20), eine dritte Diode (21) und eine vierte Diode (22),
- worin die erste Diode (19) mit der Eingangsseite (18) des Schaltkreises (30) und dem ersten Stromweg (28) verbunden ist,
- worin die zweite Diode (20) mit der Eingangsseite (18) des Schaltkreises (30) und dem zweiten Stromweg (29) verbunden ist,
- worin die dritte Diode (21) mit der Ausgangsseite (27) des Schaltkreises (30) und dem ersten Stromweg (28) verbunden ist,
- worin die vierte Diode (22) mit der Ausgangsseite (27) des Schaltkreises (30) und dem zweiten Stromweg (29) verbunden ist.

6. Leistungsschalter nach einem der Ansprüche 1 bis 5, umfassend:
- ein Netzwerk (13), das eine fünfte Diode (23), einen ersten Widerstand (25) und einen Kondensator (26) beinhaltet,
- worin die fünfte Diode (23) mit dem ersten Stromweg (28) verbunden ist,
- worin der erste Widerstand (25) und der Kondensator (26) als eine Parallelschaltung konfiguriert sind,
- worin die Parallelschaltung des ersten Widerstands (25) und des Kondensators (26) zwischen der fünften Diode (23) und dem zweiten Stromweg (29) verbunden ist.

7. Leistungsschalter nach einem der Ansprüche 1 bis 6, umfassend:
- einen Steuerkreis (32) zum Steuern der steuerbaren Schaltkomponente (24),
- worin der Steuerkreis (32) eine Zener-Diode (33) und einen zweiten Widerstand (37) umfasst,
- worin die Zener-Diode (33) und der zweite Widerstand (37) in Reihe zwischen dem ersten Stromweg (28) und dem zweiten Stromweg (29) verbunden sind,
- worin eine Steuerverbindung (34) der steuerbaren Schaltkomponente (24) mit einem internen Knoten (31) des Steuerkreises (32) zwischen der Zener-Diode (33) und dem zweiten Widerstand (37) verbunden ist.

8. Leistungsschalter nach einem der Ansprüche 1 bis 5, umfassend:
- ein Netzwerk (13), das eine fünfte Diode (23), einen ersten Widerstand (25) und einen Kondensator (26) beinhaltet,
- worin die fünfte Diode (23) mit dem ersten Stromweg (28) verbunden ist,
- worin der erste Widerstand (25) und der Kondensator (26) als eine Parallelschaltung konfiguriert sind,
- worin die Parallelschaltung des ersten Widerstands (25) und des Kondensators (26) zwischen der fünften Diode (23) und der steuerbaren Schaltkomponente (24) verbunden ist.

9. Leistungsschalter nach einem der Ansprüche 1 bis 8, umfassend:
- einen Überbrückungsschalter (5), der mit dem Eingangsanschluss (17) und der Ausgangsseite (27) des Schaltkreises (30) verbunden ist,
- worin der Überbrückungsschalter (5) parallel mit dem Schaltkreis (30) verbunden ist.

10. Leistungsschalter nach einem der Ansprüche 1 bis 9, worin der Leistungsschalter (12) als ein Hybrid-Leistungsschalter umgesetzt ist.

11. Leistungsschalter nach einem der Ansprüche 1 bis 8, worin der Leistungsschalter (12) als ein Festkörper-Leistungsschalter umgesetzt ist.

## Revendications

1. Disjoncteur, comprenant :
- une borne d'entrée (17) pour relier le disjoncteur (12) à une source de tension (1),
- une borne de sortie (35) pour relier le disjoncteur (12) à une charge (9),
- un circuit de commutation (30) présentant un côté entrée (18) relié à la borne d'entrée (17) et présentant un côté sortie (27),
- une unité de commutation de séparation (4) reliée à la borne de sortie (35) et au côté sortie (27) du circuit de commutation (30),
- dans lequel le circuit de commutation (30) comprend un premier chemin de courant (28) et un second chemin de courant (29), le premier et le second chemin de courant (28, 29) étant reliés en parallèle entre le côté entrée (18) et le côté sortie (27),
- dans lequel le circuit de commutation (30) comprend une unité de commutation pouvant être commandée (14) agencée entre le premier et le second chemin de courant (28, 29) pour court-circuiter le premier et le second chemin de courant (28, 29),
- dans lequel le circuit de commutation (30) comprend un dispositif à varistance (10) et un composant de commutation pouvant être commandé (24), dans lequel le dispositif à varistance (10) et le composant de commutation pouvant être commandé (24) sont reliés en série entre le premier et le second chemin de courant (28, 29),
**caractérisé en ce que** l'unité de commutation pouvant être commandée (14) est reliée en parallèle à la connexion en série du dispositif à varistance (10) et du composant de commutation pouvant être commandé (24).

2. Disjoncteur selon la revendication 1,
dans lequel l'unité de commutation pouvant être commandée (14) comprend au moins un commutateur pouvant être commandé (15) relié au premier chemin de courant (28) et au second chemin de courant (29).

3. Disjoncteur selon la revendication 2,
dans lequel l'unité de commutation pouvant être commandée (14) comprend un premier commutateur pouvant être commandé (15) et un second commutateur pouvant être commandé (16) reliés en parallèle entre le premier chemin de courant (28) et le second chemin de courant (29).

4. Disjoncteur selon les revendications 2 ou 3,
dans lequel l'au moins un commutateur pouvant être commandé (15) ou le premier et le second commutateur pouvant être commandé (15, 16) sont respectivement réalisés comme un transistor bipolaire à grille isolée.

5. Disjoncteur selon l'une quelconque des revendications 1 à 4, comprenant :
- une première diode (19), une deuxième diode (20), une troisième diode (21) et une quatrième diode (22),
- dans lequel la première diode (19) est reliée au côté entrée (18) du circuit de commutation (30) et au premier chemin de courant (28),
- dans lequel la deuxième diode (20) est reliée au côté entrée (18) du circuit de commutation (30) et au second chemin de courant (29),
- dans lequel la troisième diode (21) est reliée au côté sortie (27) du circuit de commutation (30) et au premier chemin de courant (28),
- dans lequel la quatrième diode (22) est reliée au côté sortie (27) du circuit de commutation (30) et au second chemin de courant (29).

6. Disjoncteur selon l'une quelconque des revendications 1 à 5, comprenant :
- un réseau (13) incluant une cinquième diode (23), une première résistance (25) et un condensateur (26),
- dans lequel la cinquième diode (23) est reliée au premier chemin de courant (28),
- dans lequel la première résistance (25) et le condensateur (26) sont configurés comme une connexion parallèle,
- dans lequel la connexion parallèle de la première résistance (25) et du condensateur (26) est reliée entre la cinquième diode (23) et le second chemin de courant (29).

7. Disjoncteur selon l'une quelconque des revendications 1 à 6, comprenant :
- un circuit de commande (32) pour commander le composant de commutation pouvant être commandé (24),
- dans lequel le circuit de commande (32) comprend une diode Zener (33) et une seconde résistance (37),
- dans lequel la diode Zener (33) et la seconde résistance (37) sont reliées en série entre le premier chemin de courant (28) et le second chemin de courant (29),
- dans lequel une connexion de commande (34) du composant de commutation pouvant être commandé (24) est reliée à un nœud interne (31) du circuit de commande (32) entre la diode Zener (33) et la seconde résistance (37).

8. Disjoncteur selon l'une quelconque des revendications 1 à 5, comprenant :
- un réseau (13) incluant une cinquième diode (23), une première résistance (25) et un condensateur (26),
- dans lequel la cinquième diode (23) est reliée au premier chemin de courant (28),
- dans lequel la première résistance (25) et le condensateur (26) sont configurés comme une connexion parallèle,
- dans lequel la connexion parallèle de la première résistance (25) et du condensateur (26) est reliée entre la cinquième diode (23) et le composant de commutation pouvant être commandé (24).

9. Disjoncteur selon l'une quelconque des revendications 1 à 8, comprenant :
- un commutateur de contournement (5) relié à la borne d'entrée (17) et au côté sortie (27) du circuit de commutation (30),
- dans lequel le commutateur de contournement (5) est relié en parallèle au circuit de commutation (30).

10. Disjoncteur selon l'une quelconque des revendications 1 à 9, dans lequel le disjoncteur (12) est réalisé comme un disjoncteur hybride.

11. Disjoncteur selon l'une quelconque des revendications 1 à 8, dans lequel le disjoncteur (12) est réalisé comme un disjoncteur à semi-conducteurs.
